# EUROPÄISCHE PATENTSCHRIFT

(11) **EP 0 878 591 B1**
(45) Veröffentlichungstag und Bekanntmachung des Hinweises auf die Patenterteilung: **01.08.2001**
(21) Anmeldenummer: 98108144.1
(22) Anmeldetag: 05.05.1998
(51) Int. Cl.: E04B 9/20, E04F 13/08, E06B 1/60, F16B 12/04, F16B 43/02, F16B 11/00

(54) **Vorrichtung zur Befestigung eines Holzelements**
Device for fastening a wooden element
Dispositif de fixation d'un élément en bois

(30) Priorität: 17.05.1997 DE 19720879
(43) Veröffentlichungstag der Anmeldung: 18.11.1998
(73) Patentinhaber: Adolf Würth GmbH & Co. KG, 74653 Künzelsau (DE)
(72) Erfinder: Humm, Siegfried, 74214 Schöntal-Westernhausen (DE); Wieland, Achim, 74211 Leingarten (DE)
(74) Vertreter: Patentanwälte Ruff, Beier und Partner

(56) Entgegenhaltungen:
- DE-A- 3 322 974
- DE-A- 3 814 190
- DE-A- 19 517 641
- DE-A- 19 546 743
- US-A- 4 038 801

## Beschreibung

Die Erfindung geht aus von einer Vorrichtung zur verdeckten Befestigung eines aus Holz bestehenden Elements mit Abstand vor einer Wand.

Es ist bereits eine Vorrichtung dieser Art bekannt (DE 25 30 854). Mit dieser bekannten Vorrichtung sollen Holzzargen von Zimmertüren, Wand- oder Deckenverkleidungen verdeckt befestigt werden. Zu diesem Zweck enthält die Vorrichtung eine an der Rückseite der Zarge anzuklebende Holzplatte.

Weiterhin bekannt ist eine Vorrichtung dieser Art (DE 38 14 190), bei der ebenfalls eine aus Holz bestehende Platte verwendet wird.

Die Verwendung von Holzplatten hat zwar den Vorteil, daß sich diese Holzplatten mit den Zargen ohne Schwierigkeiten verkleben lassen. Andererseits ist die Herstellung und Anbringung des Schwenklagers für die Schraube jedoch sehr aufwendig, so daß hier erhöhte Herstellungskosten für die Vorrichtung auftreten.

Der Erfindung liegt die Aufgabe zugrunde, eine Vorrichtung zur verdeckten Befestigung eines Holzelements mit Abstand vor einer Wand oder dergleichen zu schaffen, die sich mit geringeren Kosten herstellen läßt.

Zur Lösung dieser Aufgabe schlägt die Erfindung eine Vorrichtung mit den im Anspruch 1 genannten Merkmalen vor. Weiterbildungen der Erfindung sind Gegenstand von Unteransprüchen.

Durch die Verwendung einer Kunststoffplatte läßt sich die Vorrichtung deutlich mit geringerem Aufwand und geringeren Kosten herstellen. Die an sich schwierige Klebeverbindung zwischen dem Kunststoff der Platte und dem aus Holz bestehenden Element, beispielsweise der Zarge, wird durch die hinterschnittenen Öffnungen möglich gemacht. Der Kleber, bei dem es sich um einen üblichen Leim handeln kann, wird auf die der Zarge zugeordnete Fläche der Kunststoffplatte aufgegeben. Er dringt dort in die Öffnungen ein. Nach dem insbesondere seitlich erfolgenden Einschieben des aus Holz bestehenden Elements erfolgt eine Benetzung der Holzoberfläche und nach kurzer Zeit ein Aushärten des Leims. Es bilden sich dadurch Pfropfen innerhalb der Öffnungen, die aufgrund des Hinterschnitts zu einer Festlegung der Kunststoffplatte führen.

Die Verwendung einer aus Kunststoff bestehenden Platte macht insbesondere die Anbringung und Ausgestaltung des Schwenklagers wesentlich einfacher. Beispielsweise kann das Schwenklager einstückig an der Grundplatte angeformt werden. Das Einsetzen des Schraubenkopfs kann entweder von der der Zarge zugeordneten Seite durch eine Öffnung erfolgen, oder aber durch ein Einschnappen des Schraubenkopfs von der gegenüberliegenden Seite. Zur Erleichterung des Einschnappens kann der Kunststoffkörper auch etwas mit der Hand verformt werden. Das Aufschnappen der Kunststoffplatte auf den Schraubenkopf macht es möglich, bei der Anbringung beispielsweise zunächst die Schraube in einen Dübel bis etwa zur richtigen Position einzuschrauben und anschließend die Kunststoffplatte aufzuschnappen.

Eine weitere Möglichkeit der Anbringung des Schwenklagers kann erfindungsgemäß dadurch gegeben sein, daß das Schwenklager ein mit der Kunststoffplatte nachträglich verbindbares Teilstück aufweist. Ein Teil des Schwenklagers kann dabei von der Kunststoffplatte selbst gebildet werden.

Das Schwenklager soll einerseits eine Ausrichtung der Kunststoffplatte für den Fall ermöglichen, daß die Schraube in dem Dübel nicht exakt senkrecht zur Wandoberfläche verläuft. Andererseits soll die Kunststoffplatte gerade bei Türzargen zur Erleichterung des seitlichen Einschiebens auch schräg gestellt werden können. Um eine besonders weite Verschwenkung der Kunststoffplatte zu ermöglichen, kann erfindungsgemäß vorgesehen sein, daß die Schraube einen mindestens teilweise kugelförmig ausgebildeten Schraubenkopf aufweist. Dieser macht eine Verschwenkung besonders leichtgängig, insbesondere dann, wenn auch die Halterung im Schwenklager kugelförmig ausgebildet ist.

Es kann aber in vielen Fällen auch ausreichen, wenn die Schraube einen Senkkopf oder auch einen Linsenkopf aufweist.

Zum Einschrauben der Schraube in ein Gewinde oder einen Dübel kann der Schraubenkopf eine von der Vorderseite der Platte her durch eine Öffnung zugängliche Schraubenantriebsausbildung aufweisen, beispielsweise insbesondere eine Vertiefung. Dann ist es möglich, mit den üblichen Schraubendrehern von der Vorderseite der Platte her die Vorrichtung einzuschrauben und auch zu justieren.

Erfindungsgemäß kann jedoch auch vorgesehen sein, daß die Schraube unterhalb des Schraubenkopfs eine Schlüsselfläche aufweisen kann. Damit kann auch dann noch eine Justierung vorgenommen werden, wenn die Schraube von der Vorderseite her nicht mehr zugänglich ist.

Erfindungsgemäß kann vorgesehen sein, daß die aus Kunststoff bestehende Platte etwa rechteckig ausgebildet sein kann, wobei sich dann das Schwenklager etwa in der Mitte der Platte befindet. Es können auch Verstärkungsrippen vorgesehen sein, die von dem Schwenklager ausgehen können.

Um beim Anbringen der Zarge, insbesondere wenn es sich um eine Türzarge handelt, gewisse Toleranzen noch ausgleichen zu können, kann erfindungsgemäß vorgesehen sein, daß die Kunststoffplatte mit ihrer der Zarge zugeordneten Seite leicht konkav ausgebildet ist. Diese leichte Wölbung kann dann beim Einschieben oder Anbringen der Zarge ggf. aufgehoben werden.

Weitere Merkmale, Einzelheiten und Vorzüge der Erfindung ergeben sich aus der folgenden Beschreibung bevorzugter Ausführungsformen der Erfindung sowie anhand Zeichnung. Hierbei zeigen:
- Fig. 1: eine Aufsicht auf die einen Teil der Vorrichtung bildende Platte aus Kunststoff;
- Fig. 2: eine teilweise geschnittene Seitenansicht der Vorrichtung;
- Fig. 3: in vergrößertem Maßstab einen Teilschnitt durch die Kunststoffplatte;
- Fig. 4: in vergrößertem Maßstab eine geänderte Ausführung des Schwenklagers;
- Fig. 5: eine nochmals geänderte Ausführung des Schwenklagers;
- Fig. 6: eine Ausführungsform des Schwenklagers, bei dem die Schraube von der Vorderseite her eingesetzt werden kann.

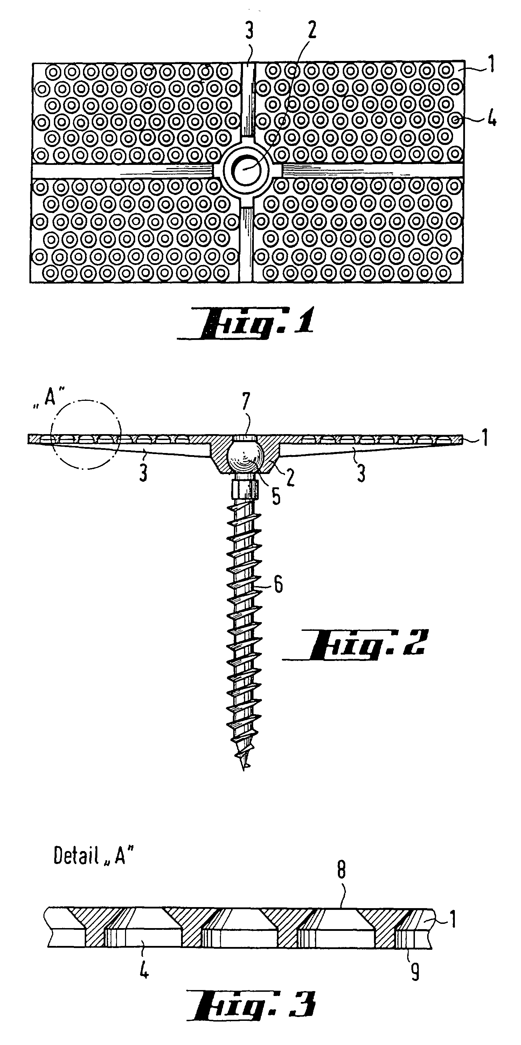

Fig. 1 zeigt eine Aufsicht auf eine Kunststoffplatte 1, die von der Erfindung dazu verwendet wird, eine nicht dargestellte Zarge, die aus Holz besteht, an einer Wand zu befestigen. Fig. 1 zeigt die Platte von der der Holzzarge abgewandten Seite. Die aus Kunststoff bestehende Platte weist die Form eines Rechtecks auf. Etwa in der Mitte der Kunststoffplatte 1 ist ein Schwenklager 2 angeordnet, in das der Kopf einer Schraube eingesetzt werden kann. Von dem Schwenklager 2 aus gehen mehrere Verstärkungsrippen 3 parallel zu den Seitenrändern der Kunststoffplatte 1. Dadurch sind vier Quadranten gebildet, in denen die Kunststoffplatte 1 eine Vielzahl von Öffnungen 4 aufweist. Alle Öffnungen gehen von der einen Flachseite der Kunststoffplatte zu der anderen Flachseite durch. Auf der der Türzarge zugeordneten Seite verringert sich der Durchmesser der Öffnungen 4.

Fig. 2 zeigt die Vorrichtung in fertigem Zustand von der Seite, wobei die Kunststoffplatte 1 geschnitten ist. In das Schwenklager 2 ist der kugelförmige Schraubenkopf 5 einer Spanplattenschraube 6 eingeschraubt. Das Schwenklager 2 weist eine teilweise kugelförmig ausgebildete Anlagefläche auf, die in Größe und Abmessung dem Durchmesser des ebenfalls kugelförmig ausgebildeten Schraubenkopfs 5 gleich ist. Die Kunststoffplatte 1 weist zentral eine durchgehende Öffnung 7 auf, die in das Schwenklager 2 führt und den Zugriff auf die Stirnseite des Schraubenkopfs 5 ermöglicht. Der Schraubenkopf 5 weist in dieser Stirnseite eine Antriebsvertiefung auf, beispielsweise in Form eines Kreuzschlitzes.

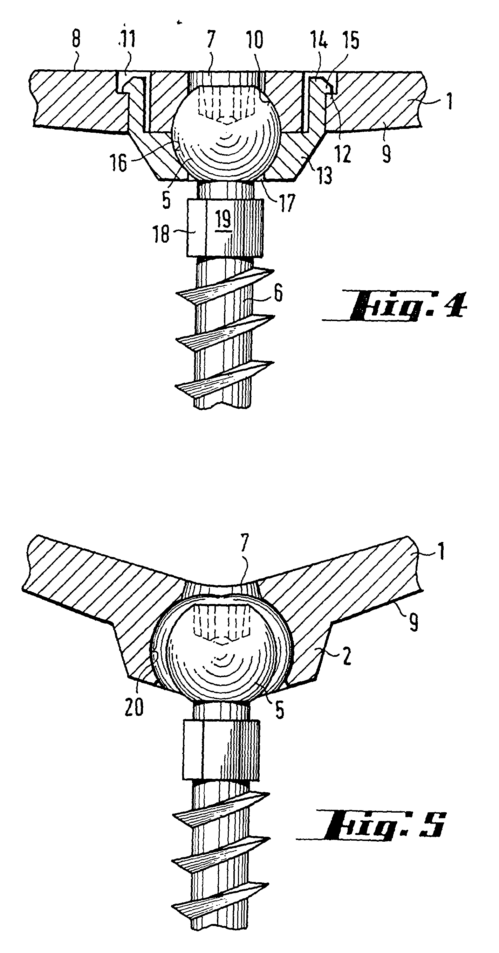

Fig. 3 zeigt nun in stark vergrößertem Maßstab einen Teilschnitt durch die Kunststoffplatte 1. Dabei ist die in Fig. 3 obere Fläche 8 der Kunststoffplatte 1 diejenige Fläche, die mit der Holzzarge zu verbinden ist. Alle Öffnungen 4 weisen von der der Zarge abgewandten Rückseite 9 ausgehend zunächst die Form von Kreiszylindern auf, die sich dann zu der Vorderseite 8 hin kegelstumpfförmig verjüngen. Wird auf die Vorderseite 8 der Kunststoffplatte 1 Kleber oder Leim aufgegeben, so gelangt dieser in die Öffnungen 4. Wird nun eine Holzplatte aufgelegt und angepreßt, so verbindet sich der Leim mit der Holzplatte und härtet dann relativ schnell aus, so daß sich in den hinterschnittenen Öffnungen 4 Pfropfen bilden, die zu einer Festlegung der Kunststoffplatte an dem Holz führen.

Um den Schraubenkopf 5 in das Schwenklager 2 einzubringen, kann die Kunststoffplatte etwas verbogen werden, so daß sich die auf der Rückseite 9 vorhandene Öffnung des Schwenklagers 2 etwas auseinander spreizt, um damit das Eindrücken des Schraubenkopfs 5 zu erleichtern.

Fig. 4 zeigt in vergrößertem Maßstab eine andere Ausführungsart des Schwenklagers 2. Die Kunststoffplatte 1 enthält in dem die zentrale Öffnung 7 umgebenden Bereich eine halbkugelförmig ausgebildete Fläche 10, die einen Teil der Schwenklagerung bildet. Die der Unterseite 9 zugewandte Öffnung dieser Fläche 10 weist eine dem Durchmesser des Schraubenkopfs 5 entsprechende Größe auf. Der in der Platte 1 angeordnete Teil des Schwenklagers ist also nicht hinterschnitten. Außerhalb der Öffnung 7 sind mehrere Öffnungen 11 mit einer Schulter 12 vorhanden, in die ein Teilstück 13 des Schwenklagers mit entsprechenden Armen 14 eingesetzt werden kann. Die Arme 14 weisen an ihrer radialen Außenseite Nasen 15 auf, die hinter die Schultern 12 greifen und dadurch das Teil 13 des Schwenklagers festlegen. Auch der nachträglich anzubringende Teil 13 des Schwenklagers weist eine halbkugelförmig ausgebildete Anlagefläche 16 auf, deren Krümmung der Form des Schraubenkopfs 5 entspricht. Der nachträglich anzusetzende Teil 13 weist ebenfalls eine zentrale Öffnung 17 für den Schraubenschaft 6 auf.

Bei der Ausführungsform nach Fig. 4 wird die Schraube zunächst mit ihrem Schraubenschaft 6 durch die Öffnung 17 des Teilstücks 13 hindurch gesteckt. In dieser Form kann die Schraube dann in einen Dübel oder den Untergrund eingeschraubt werden. Sobald die Schraube die richtige Position hat, kann dann die Platte 1 dadurch aufgeschnappt werden, daß die Arme 14 durch die Öffnungen 11 hindurch greifen. Das Wegrutschen des Lagerteils 13 wird durch einen unterhalb des Schraubenkopfs 5 angeordneten Ansatz 18 verhindert, der einen Außendurchmesser aufweist, der etwas größer als die Öffnung 17 des Teiles 13 ist. Der Ansatz 18 kann auf seiner Außenseite Schlüsselflächen 19 bilden, also Flächen, an denen man einen Schraubenschlüssel ansetzen kann. Dadurch kann noch eine Justierung der Vorrichtung erfolgen, wenn ein Zugriff auf den Schraubenkopf 5 von der Vorderseite 8 der Platte her nicht mehr möglich ist.

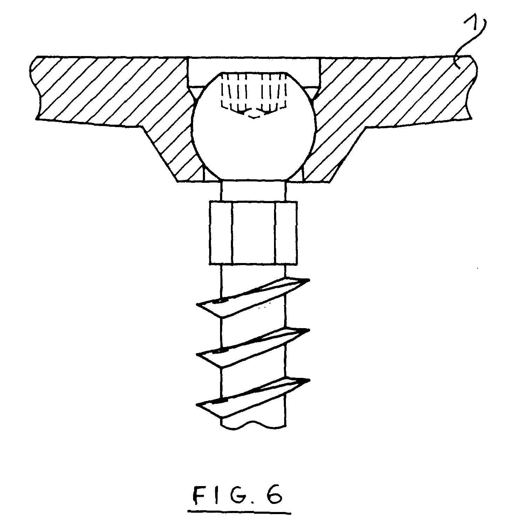

Die Fig. 5 zeigt den Zustand, wie bei der Ausführungsform nach Fig. 1 die Kunststoffplatte 1 durch Angreifen an ihren kurzen Seiten etwas verbogen wird, so daß sich das Schwenklager 2 etwas auseinander spreizt, um dadurch das Einsetzen und/oder das Entnehmen des Schraubenkopfs 5 zu erleichtern oder erst zu ermöglichen. Es ist auch hier zu sehen, daß das Schwenklager 2 eine kugelförmige Anlagefläche 20 aufweist, die von der Öffnung 7 bis zu der der Öffnung 17 entsprechenden Öffnung auf der Rückseite 9 der Platte 1 reicht.

Die Fig. 6 zeigt eine weitere Möglichkeit, wie ein Schwenklager an der aus Kunststoff bestehenden Platte angeformt werden kann. Während bei der Ausführungsform nach Fig. 4 das Schwenklager zweiteilig ausgebildet ist und die Schraube von der Rückseite der Platte 1 angebracht wird, zeigt die Fig. 6 eine Möglichkeit, die Schraube von der Vorderseite der Platte 1 einzusetzen. Das Schwenklager ist hier praktisch als eine Verengung einer durchgehenden Öffnung ausgebildet, wobei der verengte Bereich die Form einer Kugelzone aufweist. Je nach Elastizität des Kunststoffmaterials ist es daher möglich, die Schraube von der Vorderseite her einzusetzen.

## Patentansprüche

1. Vorrichtung zur verdeckten Befestigung eines Holzelements mit Abstand vor einer Wand oder dergleichen, enthaltend
1.1 eine Schraube, die
1.1.1 einen Schraubenschaft (6) und einen insbesondere in seinem Durchmesser gegenüber dem Schraubenschaft (6) vergrößerten Schraubenkopf (5) aufweist,
1.2 ein Schwenklager (2), das
1.2.1 mit dem Schraubenkopf (5) derart in Eingriff steht, daß die Schraube verschwenkt werden kann, dadurch gekennzeichnet, daß
1.3 eine aus Kunststoff bestehende Platte (1), die
1.3.1 mit der Rückseite des Holz-elements verklebbar ist,
1.3.2 wobei an der Platte das Schwenklager (2) angeordnet ist und
1.3.2 die Platte eine Vielzahl von sich zu der dem Holzelement zugewandten Seite (8) hin öffnenden hinterschnittenen Öffnungen (4) aufweist.

2. Vorrichtung nach Anspruch 1, bei der das Schwenklager (2) einstückig an der Kunststoffplatte (1) angeformt ist.

3. Vorrichtung nach Anspruch 1, bei der das Schwenklager (2) ein nachträglich mit der Kunststoffplatte (1) verbindbares Teilstück (13) aufweist.

4. Vorrichtung nach einem der vorhergehenden Ansprüche, bei der die Schraube einen mindestens teilweise kugelförmig ausgebildeten Schraubenkopf (5) aufweist.

5. Vorrichtung nach einem der vorhergehenden Ansprüche, bei dem die Schraube einen Senkkopf aufweist.

6. Vorrichtung nach einem der vorhergehenden Ansprüche, bei der der Schraubenkopf (5) eine von der Vorderseite (8) der Kunststoffplatte (1) her durch eine Öffnung (7) zugängliche Schraubenantriebsausbildung aufweist, insbesondere eine Vertiefung.

7. Vorrichtung nach einem der vorhergehenden Ansprüche, bei der die Schraube unterhalb des Schraubenkopfs (5) eine Schlüsselfläche (19) aufweist.

8. Vorrichtung nach einem der vorhergehenden Ansprüche, bei der die Kunststoffplatte (1) rechteckig ausgebildet ist und das Schwenklager (2) in der Mitte der Platte (1) angeordnet ist.

9. Vorrichtung nach einem der vorhergehenden Ansprüche, bei der die Kunststoffplatte (1) auf ihrer dem zugeordneten Holzelement zugewandten Seite leicht konkav gekrümmt ausgebildet ist.

10. Vorrichtung nach einem der vorhergehenden Ansprüche, bei der das Schwenklager so ausgebildet ist, daß die Schraube von der Vorderseite der Kunststoffplatte (1) her in das Schwenklager eingesetzt werden kann.

## Claims

1. Device for the concealed fastening of a wooden element in spaced manner in front of a wall or the like, containing
1.1 a screw, which
1.1.1 has a screw shank (6) and a screw head (5), whose diameter is larger than the screw shank (6),
1.2 a swivel bearing (2), which
1.2.1 is in engagement with the screw head (5) in such a way that the screw can be swivelled,
characterized in that
1.3 a plastic plate (1), which
1.3.1 can be bonded to the back of the wooden element,
1.3.2 the swivel bearing (2) is located on the plate and
1.3.2 the plate has a plurality of undercut openings (4) opening to the side (8) facing the wooden element.

2. Device according to claim 1, wherein the swivel bearing (2) is shaped in one piece on the plastic plate (1).

3. Device according to claim 1, wherein the swivel bearing (2) has a segment (13) subsequently connectable to the plastic plate (1).

4. Device according to one of the preceding claims, wherein the screw has an at least partly spherically constructed screw head (5).

5. Device according to one of the preceding claims, wherein the screw has a countersunk head.

6. Device according to one of the preceding claims, wherein the screw head (5) has a screwdriving construction accessible through an opening (7) from the front (8) of the plastic plate (1) and in particular a depression.

7. Device according to one of the preceding claims, wherein the screw has a key face (19) below the screw head (5).

8. Device according to one of the preceding claims, wherein the plastic plate (1) has a rectangular construction and the swivel bearing (2) is located in the centre of the plate (1).

9. Device according to one of the preceding claims, wherein on its side facing the associated wooden element, the plastic plate (1) is slightly concavely curved.

10. Device according to one of the preceding claims, wherein the swivel bearing is constructed in such a way that the screw can be inserted in the swivel bearing from the front of the plastic plate (1).

## Revendications

1. Dispositif de fixation cachée d'un élément en bois à distance d'un mur ou similaire, comprenant
1.1 une vis qui
1.1.1 une tige de vis (6) et une tête de vis agrandie (5) en particulier dans son diamètre par rapport à la tige de vis (6) ,
1.2 un palier oscillant (2) qui
1.2.1 entre en prise avec la tête de vis (5) de telle sorte que la vis peut être basculée, caractérisé en ce que
1.3 une plaque (1) se composant de matière plastique qui
1.3.1 peut être collée à la face arrière de l'élément en bois,
1.3.2 Le palier pivotant (2) étant disposé sur la plaque et la plaque présentant un grand nombre d'ouvertures contredépouillées (4) s'ouvrant en direction de la face tournée (8) vers l'élément en bois.

2. Dispositif selon la revendication 1, où le palier pivotant (2) est moulé d'une seule pièce à la plaque en matière plastique.

3. Dispositif selon la revendication 1, où le palier pivotant (2) présente une pièce (13) reliable ultérieurement à la plaque (1) en matière plastique.

4. Dispositif selon l'une des revendications précédentes, où la vis présente une tête de vis (5) de forme au moins sphérique partiellement.

5. Dispositif selon l'une des revendications précédentes, où la vis présente une tête conique.

6. Dispositif selon l'une des revendications précédentes, où la tête de vis (5) présente un entraînement de vis accessible depuis la face avant (8) de la plaque (1) en matière plastique par une ouverture (7), en particulier une cavité.

7. Dispositif selon l'une des revendications précédentes, où la vis présente en dessous de la tête de vis (5) une surface de clé (19).

8. Dispositif selon l'une des revendications précédentes, où la plaque (1) en matière plastique est de forme rectangulaire et le palier pivotant (2) est disposé au milieu de la plaque (1).

9. Dispositif selon l'une des revendications précédentes, où la plaque (1) en matière plastique est de forme incurvée légèrement concave sur sa face tournée vers l'élément de bois associé.

10. Dispositif selon l'une des revendications précédentes, où le palier pivotant est réalisé de manière que la vis puisse être insérée depuis la face avant de la plaque (1) en matière plastique dans le palier pivotant.
